# EUROPEAN PATENT SPECIFICATION

(11) **EP 3 943 364 B1**
(45) Date of publication and mention of the grant of the patent: **18.10.2023**
(21) Application number: 21186678.5
(22) Date of filing: 20.07.2021
(51) Int. Cl.: B62B 3/00, B62B 3/08, B62B 5/00, B62B 5/02, B62B 1/16, B62D 51/00, B62D 51/04

(54) **MOTORIZED TROLLEY FOR TRANSPORTING A LOAD**
MOTORISIERTER WAGEN ZUM TRANSPORT EINER LADUNG
CHARIOT MOTORISÉ POUR TRANSPORTER UNE CHARGE

(30) Priority: 22.07.2020 IT 202000017764
(43) Date of publication of application: 26.01.2022
(73) Proprietor: Zonzini, Claudio, 37052 Casaleone (VR) (IT); Zonzini, Jacopo, 37052 Casaleone (VR) (IT); Zonzini, Arianna, 37053 Cerea (VR) (IT); Zonzini, Laura, 37053 Cerea (VR) (IT)
(72) Inventor: Zonzini, Claudio, 37052 Casaleone (VR) (IT); Zonzini, Jacopo, 37052 Casaleone (VR) (IT); Zonzini, Arianna, 37053 Cerea (VR) (IT); Zonzini, Laura, 37053 Cerea (VR) (IT)
(74) Representative: Braidotti, Andrea

(56) References cited:
- CN-A- 103 129 591
- CN-A- 105 691 431
- CN-A- 106 080 724
- FR-A1- 3 053 302

## Description

The present invention relates to a trolley for the transport of a load, in particular on stairs, both straight and helical, or other inclined paths, as well as on substantially flat paths. In particular, the present invention relates to a self-propelled stairlift trolley.

Motorized stairlift trolleys are known for transporting goods both in bulk, such as in a construction site, and packaged, such as boxes containing various types of items to be transported along flights of stairs, eg in the absence of a lift or freight elevator. For example, known stairlift trolleys can be used to transport, with or without packaging, automatic dispensers, photocopiers, motors and components of lifts, stoves, fireplaces, boilers, machinery and various materials, including construction materials.

Known trolleys for transporting loads on stairs generally have a frame mounted on wheels or tracks and a grip handle.

However, no trolley has so far been proposed that allows any type of load to be easily transported over a wide range of stairs.

In particular, the known trolleys are not fully satisfactory in the case of large loads, in particular in the case of very high loads, which are complicated to transport in stable conditions.

CN106080724 concerns a power assisted transfer trolley for climbing stairs. In particular, the trolley comprises a tracked structure on which a loading structure is articulated which is provided with lateral wheels.

CN103129591 relates to a transport trolley for gas cylinders which comprises a track structure on which two small wheels are mounted.

FR3053302 relates to a trolley which comprises a tracked structure on which a pair of wheels is mounted.

CN105691431 relates to a transport trolley for gas cylinders which comprises a track structure and a loading structure on which two lateral wheels are mounted.

The object of the present invention is to propose a trolley which allows to overcome, at least in part, the drawbacks present in known trolleys.

Another object of the present invention is to propose a trolley capable of carrying a load on stairs.

Another object of the present invention is to propose a trolley which allows a load to be safely transported up stairs, so as not to ruin or overturn the load.

Another object of the present invention is to propose a trolley that can be easily made to climb the first step or to descend easily from the last degree of a stair.

Another object of the present invention is to propose a trolley by means of which the transport conditions can be easily adapted during the ascent and descent on and from a stair.

Another object of the present invention is to propose a trolley capable of carrying a load both on straight staircases and on helical staircases even with a very low radius of curvature.

Another object of the present invention is to propose a trolley that can be guided starting from both its sides.

Another object of the present invention is to propose a trolley capable of balancing the load during transport on stairs.

Another object of the present invention is to propose a trolley which allows to transport large loads, in particular high loads, in a stable, safe and comfortable way.

Another object of the present invention is to propose a trolley which is reliable and resistant over time.

Another object of the present invention is to propose a trolley which can be manufactured simply, quickly and at low costs.

Another object of the present invention is to propose a trolley of low weight and easy to transport.

Another object of the present invention is to propose a trolley which is an alternative and / or an improvement with respect to traditional solutions.

Another object of the present invention is to propose a trolley which has an alternative and / or improved configuration, both in terms of construction and in functional terms, with respect to traditional solutions.

All these purposes, either individually or in any combination thereof, and others that will result from the following description, are achieved, according to the invention, with a stair-climbing trolley having the characteristics indicated in claim 1.

The present invention is further clarified below. in one of its preferred embodiments shown for purely illustrative and non-limiting purposes with reference to the attached drawing tables, in which:
- Figure 1: shows a side view of the trolley according to the invention in a vertical condition in which it is in contact with the support surface with wheels only,
- figure 1a: shows an enlarged detail of fig. 1,
- figure 2: shows it in a perspective view in a substantially horizontal condition in which it is in contact with the support surface with the tracks only and in which the load structure is close to the tracks and the load-bearing frame,
- figure 3: shows it in front view when it is in the condition of fig. 2,
- figure 4: shows it in a perspective view in the same condition as fig. 1,
- figure 5: shows it in side view when, starting from the vertical condition of fig. 1, the load-bearing frame with the tracks are tilted backwards, thus moving them away from the loading structure,
- figure 5a: shows an enlarged detail of fig. 5,
- figure 6: shows it in a perspective view in a condition in which it is in contact with the support surface with the tracks only and in which the load structure is spaced from the tracks and from the supporting frame,
- figure 7: shows it in view side in the condition of fig. 6,
- figures 8a-8f: show a side view and in sequence the trolley according to the invention, with a load to be transported, during the descent of a first flight of stairs,
- figures 9a-9: gshow a side view of the trolley according to the invention, with a load to be carried, during the descent of a second flight of stairs.

In the figures of the attached drawing tables, identical or similar parts or components are marked with the same reference numbers.

Hereinafter with "load", indicated as a whole with the reference number "50", we mean any object or goods, or set of several objects / goods, whether packed or unpacked, particularly heavy. Conveniently, the trolley 1 according to the invention is particularly suitable for transporting a load 50 in which one of the dimensions - ie the height - is much greater than the other two.

As is clear from the figures, the invention relates to a trolley 1 which is suitable for transporting a load 50 over a difference in height, in particular on a stair 90, both up and down, but also on a ramp without steps. Conveniently, the trolley 1 is also suitable for transporting a load 50 along a substantially flat path. Preferably, the trolley 1 is a self-propelled stair-climbing trolley.

The trolley 1 comprises a load-bearing frame 2 on which at least two tracks 3 are rotatably mounted so as to protrude from the lower part of said load-bearing frame 2, thus defining a lower sliding plane 4 for the trolley 1.

Conveniently, the supporting frame 2 substantially acts as a support frame for two lateral tracks 3.

Preferably, the trolley 1 comprises two tracks 3 which are mounted movable or rotatable on the opposite sides of the supporting frame 2. In particular, the two tracks 3 are substantially parallel and spaced from each other.

Conveniently, moreover, the two tracks 3 can be mounted so as to protrude at the front and / or rear with respect to the supporting frame 2.

A version with two tracks 3 positioned / mounted on the sides of the supporting frame 2 will be described below, however it is understood that what has been said is also valid in the presence of more than two tracks 3.

Conveniently, each of the two tracks 3 comprises a main portion 30a, which defines the first sliding plane 4, and at least a secondary portion 30b, which is inclined / inclinable with respect to the portion main 30a. The secondary portion 30b can be positioned in correspondence with the front F or the rear R of the carriage 1.

Conveniently, the main portion 30a has a much greater development in length than that of the secondary portion 30b; preferably, the main portion 30a is at least twice as large as the secondary portion 30b, and - even more preferably - it is about two and a half times the secondary portion 30b.

Conveniently, each track 3 is defined so that the main portion 30a and the secondary portion 30b are defined by the same / single belt / body, where the secondary portion is substantially the inclined extension of the main portion. Conveniently, in an embodiment not shown, the main portion 30a and the secondary portion 30b are defined by distinct belts wound around respective motorized support wheels, at least one for the main portion and at least one for the secondary portion.

Conveniently, the main portion 30a develops longitudinally, preferably parallel along the length of the sides of the trolley 1 and in particular of the supporting frame 2.

Conveniently, each track 3 is returned around two rotating elements 31 'and 31' ', which they rotate around respective axes of rotation (toothed wheels, pulleys or chains), so that each track 3 has a first upper section in use, preferably substantially flat, a second lower section in use, preferably substantially flat, and intended to come into contact with the support surface (ground and / or stairs).

Preferably, while the first revolving element 31 'is substantially coplanar with the supporting frame 2, the other (second) revolving element 31' 'is substantially spaced apart and not coplanar with respect to the plane in which the supporting frame 2 substantially lies with the element swivel 31 '.

Advantageously, a transmission component 22 is provided between the main portion 30a and the secondary portion 30b (for example comprising rotatable toothed wheels, pins or the like). Conveniently, said transmission component 22 can be adjustable, to thus modify the inclination of the secondary portion 30b with respect to the main portion 30a.

The trolley 1 also comprises motor means or means for driving the tracks 3, such as an electric motor or the like, not shown in the drawings, intended to control the rotation of the tracks 3 and, if the trolley rests on a surface (ground or stairs) in correspondence of the tracks, the advancement of the carriage 1 on the surface. Conveniently, the motor means cause the rotation of at least one rotatable element of each track, preferably of the second rotatable element 31 " of the secondary portion 30b. Therefore, the rotating elements 31 " of the secondary portion 30b are preferably motorized.

Preferably, the motor means of the tracks 3 are positioned in correspondence with the secondary portion 30b of said tracks. Preferably, if there are several tracks 3 as in the case shown in the figures, the carriage 1 comprises two motors, one for each track 3. Advantageously, each of the tracks themselves can be operated by a respective motor means independently of the other, track 3.

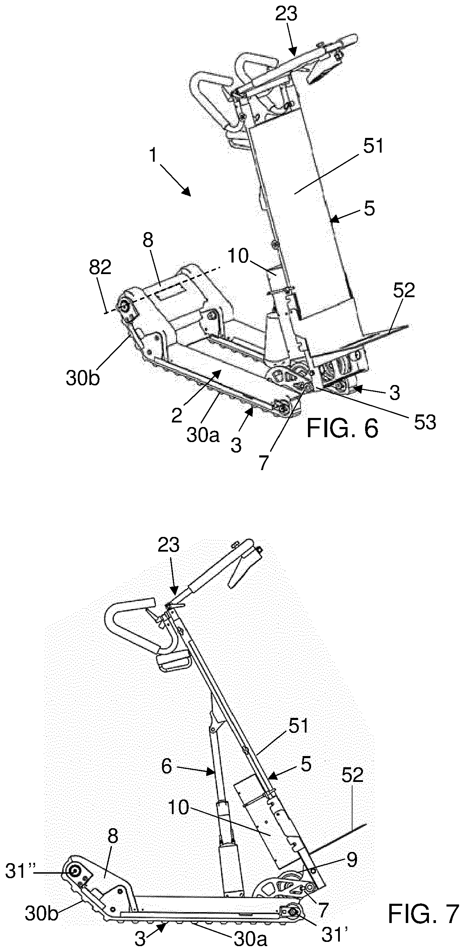

The motor means of the tracks 3 are aligned with each other along a direction 82 which corresponds or is parallel to the direction of mutual spacing (ie the transverse direction with respect to the longitudinal development) of the two tracks 3 (see fig. 6).

Preferably, the motor means comprise two tubular motors, one for each track 3, and the motorized output shafts of said motors are coaxial and parallel to the rotation axes of the rotating elements 31 'and 31' 'around which said tracks 3.

Preferably, the motor means of the tracks 3 are housed internally between the two tracks, in particular within the space delimited laterally by the two tracks 3. More in detail, the distance between the motor means of the two tracks 3 is less than distance between the tracks themselves.

The motor or drive means are independent for each of said two tracks 3 and are positioned internally between said two tracks 3 in correspondence with said secondary portion 30b of the tracks 3 which is inclined with respect to said main portion 30a.

Advantageously, each track 3 can then comprise tensioning rollers, not shown, of the corresponding track.

Advantageously, said at least one track 3 can be covered laterally and / or above, at least in part, by a casing.

Preferably, in correspondence with the secondary portion 30b which is inclined, a transversal casing 8 is provided for containing and / or covering the respective motor means for driving the tracks 3. Conveniently, said transversal casing 8 extends between the internal sides of the two tracks 3 and is fixed and / or mounted on the supporting frame 2.

The trolley 1 comprises a load structure 5 on which the load 50 to be transported is intended to be positioned / placed. The load structure 5 comprises two load bases, 51 and 52 respectively, which are angled to each other, preferably arranged so as to define an angle of about 90 °. In particular, the second load base 52 acts as a lower support for the load to be transported 50, while the first load base acts as a lateral support for the load to be transported 50. Conveniently, the first load base 51 is defined by the base of the load structure 5 to which the means 6 are articulated / pivoted, as described below, to vary the inclination between said load structure 5 and the support frame 2.

In particular, advantageously, the load structure 5 can be of variable dimensions, in order to adapt to loads of different sizes. Conveniently, for this purpose, the second load base 52 can be moved with respect to the first load base 51. Advantageously, an actuator can be provided to automate the movement of the second load base 52 with respect to the first load base 51.

Conveniently, as said, the two load bases 51 and 52 define respective support surfaces for the load to be transported. Conveniently, the two load bases 51, 52 comprise a substantially laminar element, to thus define a continuous and full support base for the load to be transported.

Conveniently, the load structure 5 comprises a load frame 53 on which a plate 54 is preferably fixed which defines the first load base 51, while the second load base 52 is defined by a plate 55 with lateral extensions for hooking to the frame load 53.

Conveniently, on the load structure 5, and preferably at the rear of the load base 51, there is mounted at least one containment box 10 for the power supply unit (battery) of the trolley 1 and / or for the electronic control unit and control of the trolley 1, and in particular of the motor or drive means of the tracks 3. Preferably, the containment box of the power supply unit (battery) is independent / distinct from that of the control unit, to thus allow the removal / replacement of the power supply unit (battery).

Advantageously, therefore, the power supply unit (battery) of the trolley 1 and the electronic command and control unit are mounted on the load structure 5 and this - unlike the traditional solutions in which they were instead mounted on the supporting frame 2 between the tracks 3 - makes it possible to simplify the wiring for the power supply and control of the motors, actuators and drive means with which the trolley is equipped. Preferably, the cables that come out of the box 10 then run parallel to the two tracks 3 (and in particular under the relative upper covering casings), to thus reach the motor means provided in correspondence with the transverse casing 8.

The trolley 1 also comprises means 6 for causing angular inclination / displacement of the load structure 5 with respect to the load-bearing frame 2, as well as with respect to the tracks 3. Conveniently, the means for angular inclination / displacement of the load structure 5 can for example comprise one or more actuators 60 or jacks, for example electric, hydraulic or pneumatic. Advantageously, an actuator 60 is provided which is pivoted on one side, for example at one end of its own cylinder, to the supporting frame 2, while on the other side, for example at one end of the rod, it is hinged, to the load structure 5, in particular it is hinged / articulated to the first load base 51 and, in more detail, to the load frame 53. Conveniently, said means 6 are electronically connected to the electronic control unit, from which they thus receive corresponding actuation commands .

Advantageously, during the step of ascent and descent of the stair, the means for angular displacement 6 are configured to incline the load structure 5 with respect to the frame 2 and the tracks 3 which rest and advance on the steps of the stair. Advantageously, the means for angular displacement 6 are controlled - manually by the operator or automatically - so as to vary the inclination of the load structure 5, with the relative load 50, with respect to the frame 2 and the tracks 3 (and this on the basis of the slope of the stair and / or the characteristics of the load) in order to compensate for the center of gravity of the entire trolley while it is carrying the load.

Conveniently, the means for angular displacement 6 are configured to cause angular displacement of the load structure 5 around a substantially horizontal axis and, preferably, transverse to the two tracks 3.

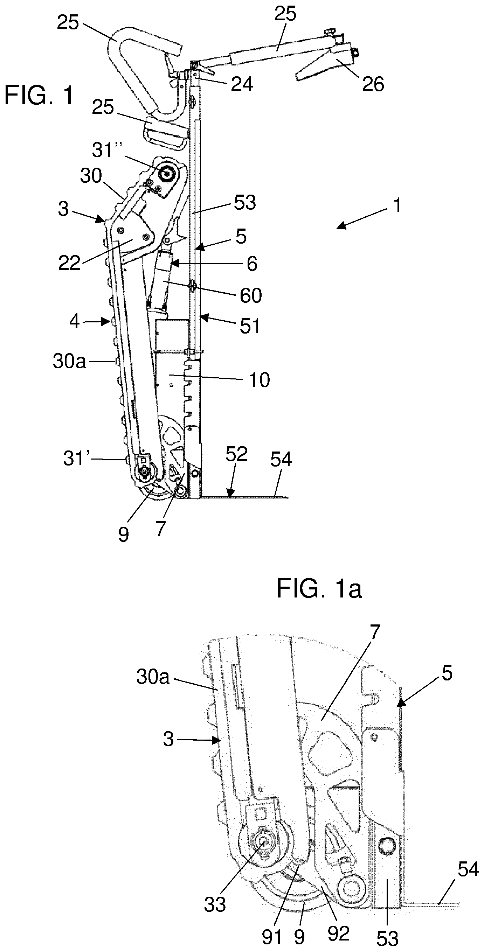

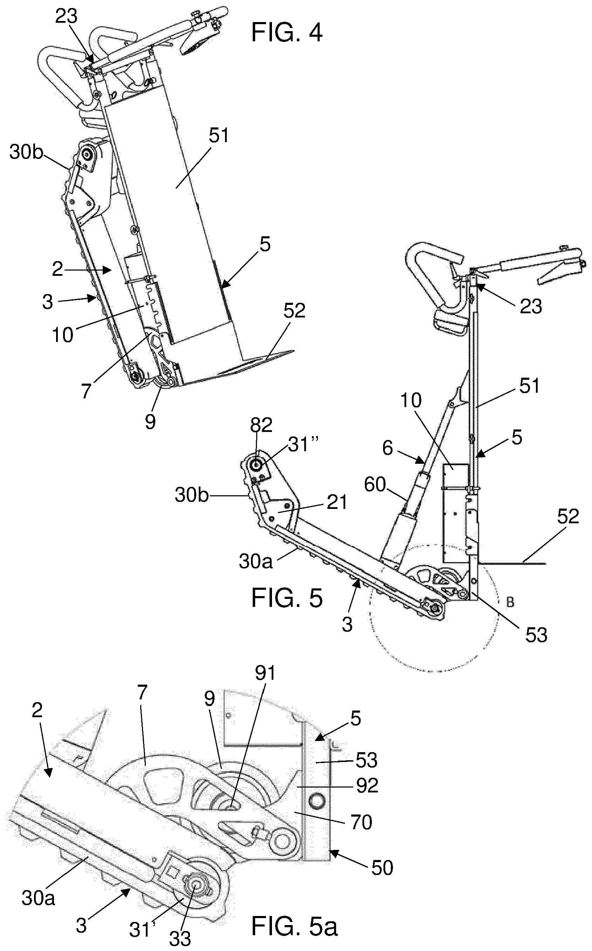

Advantageously, the means for angular displacement 6 are configured to cause the angular displacement of the load structure 5 from a first condition in which the load base 51 of said structure is substantially and more close to the load-bearing frame 2 and the tracks 3 (see figs. 1, 2 and 4) and, preferably, it is substantially in contact with the transverse casing 8, and at least a second condition (see fig. 5, 6 and 7) in which the load base 51 of the structure 5 is further spaced from the supporting frame 2 and from the tracks 3.

In the trolley 1 according to the present invention, the load structure 5 is articulated to the load-bearing frame 2 in correspondence with the zone opposite to the latter with respect to that in which the portion is provided inclined condary 30b of the tracks 3. In particular, if the secondary portion 30b of the tracks 3 is positioned at the front F of the trolley 1, then the load structure 5 is articulated to the supporting frame 2 at the rear R of the trolley; correspondingly, if the secondary portion 30b of the tracks 3 is positioned at the rear R of the trolley 1, then the load structure 5 is articulated to the supporting frame 2 at the front F of the trolley.

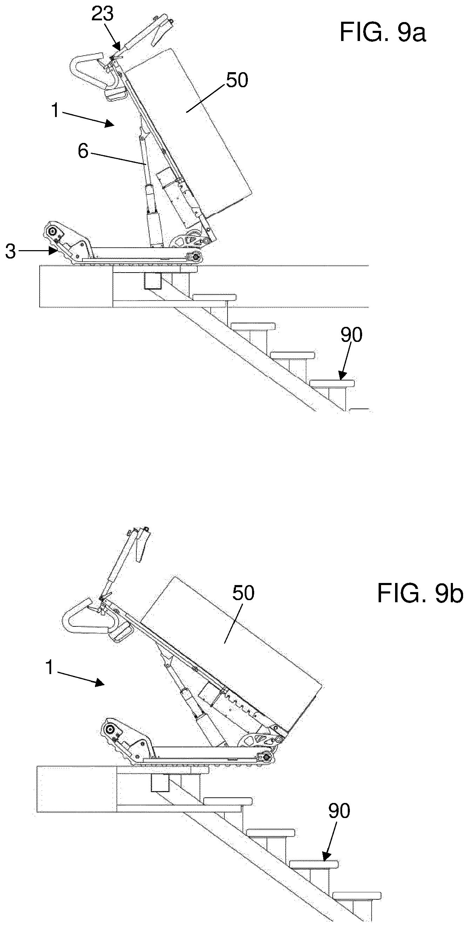

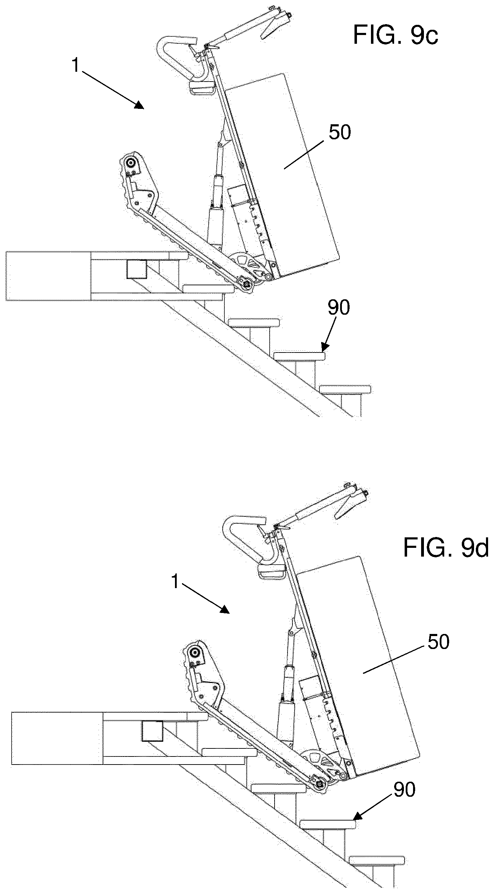

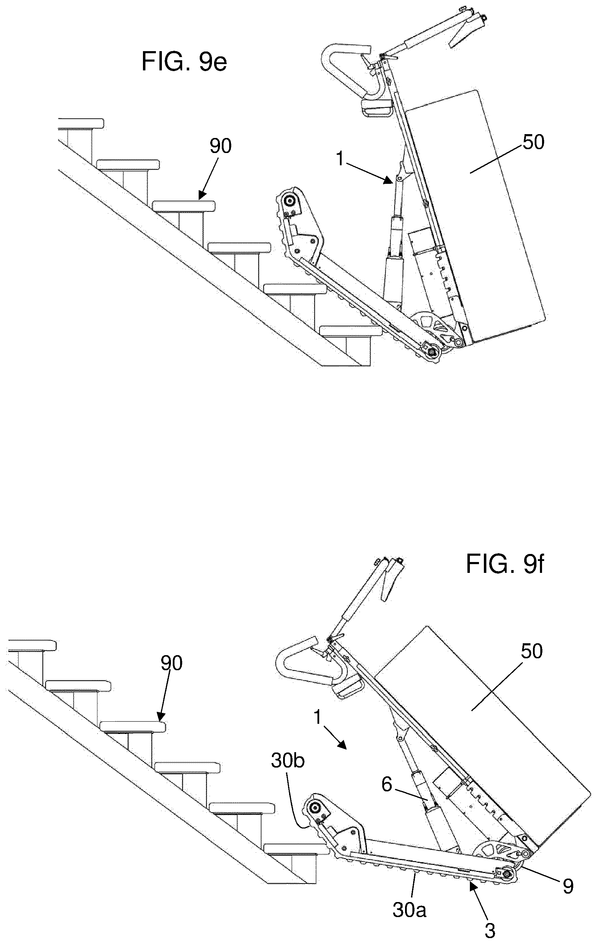

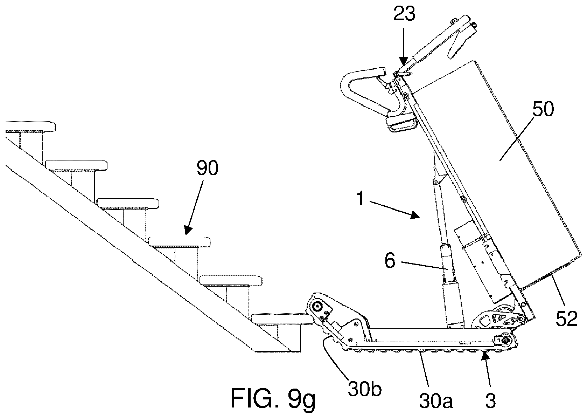

Conveniently, the secondary portion 30b has an inclination such that, when the main portion 30a rests entirely on the landing or ground floor, and is located near and in front of a first step of the staircase 90 to be climbed, said secondary portion 30b comes into contact with said first step (see for example fig. 9g), and in particular with the protruding part of the tread of said step. In other words, the secondary portion 30b is configured so that the height of its free end (i.e. the distance with respect to the extension of the lower portion of the main portion 30a) is equal to or greater than the rise of the traditional steps, and - preferably - is equal to or less than about 21 cm. Advantageously, the presence of the secondary portion 30b which is inclined makes it easier to grasp the first step of the stair to climb.

Advantageously, for the articulation of the load structure 5 to the supporting frame 2, two articulation arms 7 are provided, one for each side / side of the structure and of the frame. In particular, each articulation arm 7 is hinged at one end to the load-bearing frame 2 and at the other end to the load structure 5, and in particular to rear brackets 70 fixed to the load frame 53.

Conveniently, the articulation arms 7 are configured so that their end pivoted to the load structure 5 can protrude frontally beyond the first rotating element 31 'of the tracks 3.

In particular, the load structure 5 is articulated to the bearing frame 2 in correspondence with its lower end part 11, ie in correspondence with the end part of the latter which in use is always at a lower height than the upper end part.

The load structure 5 comprises means for supporting and sliding or rolling on a surface, for example at least one wheel 9, thus delimiting a second sliding plane which is alternative to the first sliding plane 4. Preferably, said supporting and sliding means or rolling comprise at least two equal and coaxial wheels 9.

Preferably, the supporting and sliding or rolling means, preferably the wheels 9, are positioned internally between said two tracks 3, and in particular they are positioned inside the space delimited laterally by the two tracks 3, thus optimizing the lateral dimensions of the trolley 1. More in detail, the distance between the two wheels 9, facing and parallel, is less than the distance between the tracks 3, facing and parallel.

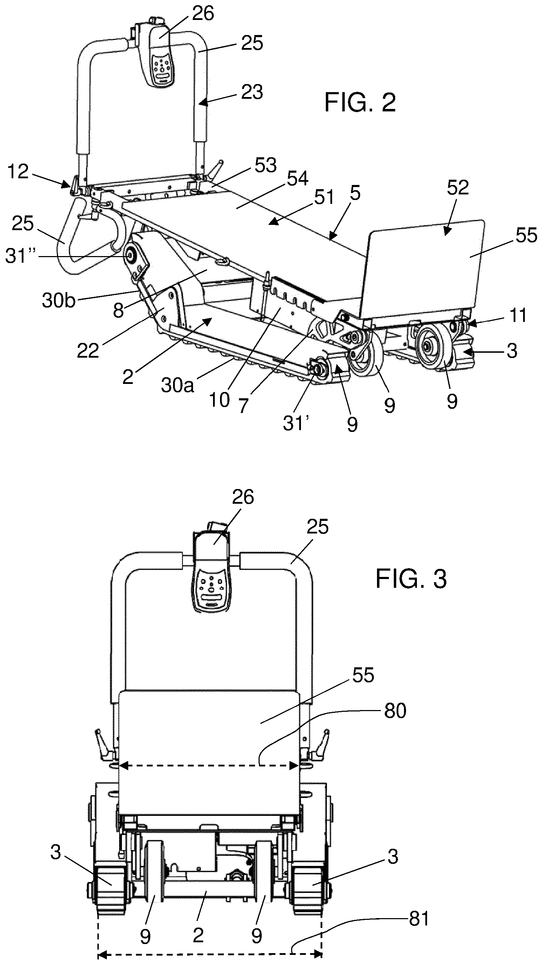

Preferably, as illustrated in fig. 3, the width 80 (ie the lateral development) of the loading structure 5 is substantially equal to or less than the lateral distance 81 (in particular defined in correspondence with the outermost lateral section) between the two tracks 3, thus optimizing the lateral dimensions of the trolley 1.

In particular, trolley 1 is configured so that:
- when the tracks 3 are in contact with the lower support surface (floor or steps), then the wheels 9 mounted on the load structure 5 are spaced apart, and therefore not in support / contact with said lower support surface,
- when the wheels 9 mounted on the load structure 5 are in contact with the lower support surface (floor or steps), then the tracks 3 are spaced apart, and therefore not in contact, with said lower support surface.

The trolley 1 is configured to assume at least the following two conditions, and in particular:
- a first condition in which it is in contact with the lower support surface only with said wheels 9, which therefore are at a lower level than said tracks 3,
- a second condition in which it is in contact with the support surface only with said tracks 3, which therefore are at a lower level than the wheels 9.

Conveniently, the wheels 9 are mounted on the load structure 5 at the end part 11 of the first load base 51, and in particular of the load frame 53. Preferably, said at least one wheel 9 is rotatable around an axis 91 which is substantially horizontal and parallel, and is arranged substantially transversely between the tracks 3.

Conveniently, the The axis of articulation of the articulation arms 7 to the load structure 5 is distinct and misaligned / parallel with respect to the axis 91 of rotation of said at least one wheel 9.

Conveniently, each wheel 9 is mounted on a respective support 92 which is fixed at the rear to the load structure 5, and in particular to the load frame 5. Preferably, the rear bracket 70, on which the arm 7 is hinged, d it also defines the support 92 for a corresponding wheel 9.

Preferably, the articulation arms 7 have a substantially "L" shape with the short side articulated to the supporting structure 2 and with the long side protruding from the front beyond the first rotating element 31 of the tracks 3 and which is articulated to the load structure 5.

Preferably, in the load structure 5, the same elements - which are defined for example by the rear bracket 70 - in correspondence with which the articulation arms 7 are articulated, also act as a support for the axis or axes of one or more wheels 9.

Preferably, the axis 91 of rotation of said at least one wheel 9 is parallel to the axis / direction of mutual alignment 82 of the motor or drive means - which are independent of each other - of the two tracks 3.

Preferably, the axis of articulation of the articulation arms 7 to the load structure 5 is parallel to the axis / direction of alignment 82 of the means the motors or drives - which are independent of each other - of the two tracks 3.

Conveniently, the load structure 5 is configured so that the trolley 1 can be in contact with the lower support surface (cf. fig. 1), in particular horizontal, only with the wheels 9 and, preferably, with at least a part of the load structure 5, in particular with the lower end of the load frame 53 and / or with at least a part of the second support base 52. In particular, in this condition in which the trolley is substantially vertical, the tracks 3 do not rest on the floor / ground and are arranged / oriented substantially vertically, or slightly inclined (for example by about 0-25 °) with respect to the vertical. Advantageously, the wheel 9 is substantially flush with the lower end of the load frame 53 and, preferably, can be flush with the plate defining the second support base 52.

Advantageously, in this condition in which the trolley is substantially vertical , the trolley 1 rests on the floor / ground only with said at least one wheel 9 and with a part of the load structure 5, in particular with the lower end of the load frame 53.

Conveniently, when the trolley 1 is in the condition in which the load structure 5 (and in particular the load frame 53) is substantially close to the load-bearing frame 2 (see fig. 1) - and in particular they define an angle of about 0-25 °, preferably about 5 -15 ° - the wheels 9 mounted on the loading structure 5 protrude beyond the tracks, and in particular protrude beyond the rotating elements 31 'of the main portion 30a. In particular, in this case, the carriage 1 is in a substantially vertical condition.

Conveniently, when the trolley is in the condition in which the load structure 5 (and in particular the load frame 53) is spaced apart from the load-bearing frame 2 - and in particular they define between them an angle greater than about 15 °, preferably greater of about 25 ° - the wheels 9 mounted on the loading structure 5 are raised with respect to the tracks 3, and in particular they are raised with respect to the rotating elements 31 'of the main portion 30a.

Advantageously, the trolley 1 according to the present invention is configured so that the rotation axis 91 of said at least one wheel 9, which is mounted on the load structure 5 and the rotation axis 33 of the rotating elements 31 'provided at the ends of the main portion 30a of the tracks 3 are substantially always parallel to each other, but never coaxial. In particular, the articulation arms 7 are configured so that during the angular displacement, caused by the approach / removal means between the supporting frame 2 and the load structure 5, there is never overlap / alignment between the rotation axis. 91 of the wheels 9 and the axis of rotation 33 of the rotating elements 31 'of the tracks 4.

Conveniently, said at least one wheel 9 can be idle. Alternatively, said at least one wheel 9 can be moved by a suitable motor which can coincide with the motor which moves at least one of the tracks 3, or it can be a dedicated motor (not shown).

Advantageously, the trolley 1 is equipped with handle means 23 which are mounted on the load structure 5. Preferably, the grip / grip means 23 are mounted in correspondence with the upper end part 12 of the load structure 5, i.e. in correspondence with the end part opposite to the lower one 11 which is articulated to the supporting frame 2. Advantageously, the grip means 23 comprise a frame 24 which is mounted, preferably in a telescopic way, on the load frame 53. Conveniently, one or more are mounted on the frame 24 handles 25, preferably at various heights and various positions and / or angles.

Advantageously, a user interface for command and / or control 26 of the trolley can be mounted on the handle means 23, such as for example a pushbutton panel, with buttons and / or levers, and / or a touch-screen.

Alternatively, the command and / or control user interface of the trolley 1 can be positioned on an appropriate remote control, or other remote control system, which thus allows its use by an operator even if it is not in contact with / in the vicinity of the trolley itself.

Advantageously, as mentioned, when the supporting frame 2 and the load structure 5 are close to each other, the trolley 1 is in a substantially vertical condition, and rests substantially on the ground on said at least one wheel 9 and / or with at least one part of the support base 52 of the loading structure 5. In substance, unlike the traditional solutions, the trolley 1 has a further operating condition, in which the latter is substantially arranged vertically, and this condition can be used to move the trolley up a substantially horizontal flat ground and / or near the beginning of the ascent of a stair 90 and / or near the end of the descent of a stair 90, as described in more detail below.

In particular, advantageously, when the trolley 1 is in the vertical operating condition, the trolley itself can be moved - maintaining in this condition - by means of the wheels 9.

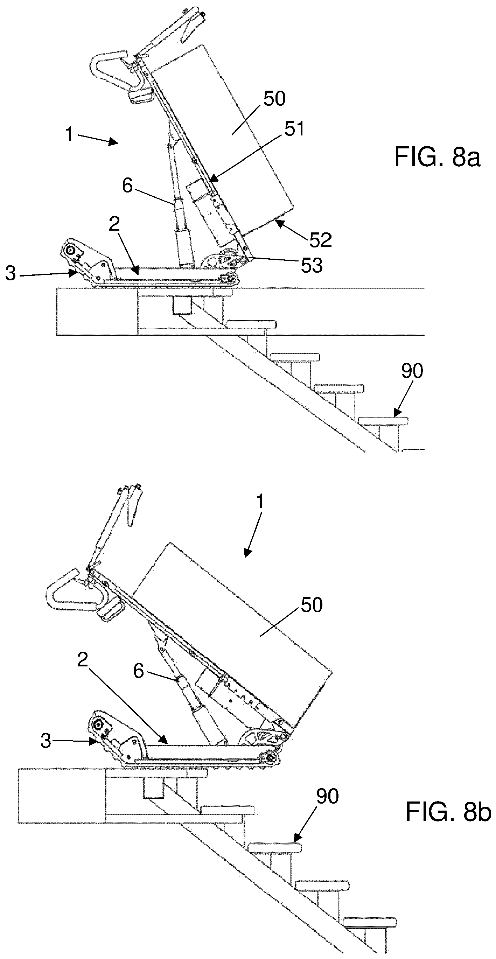

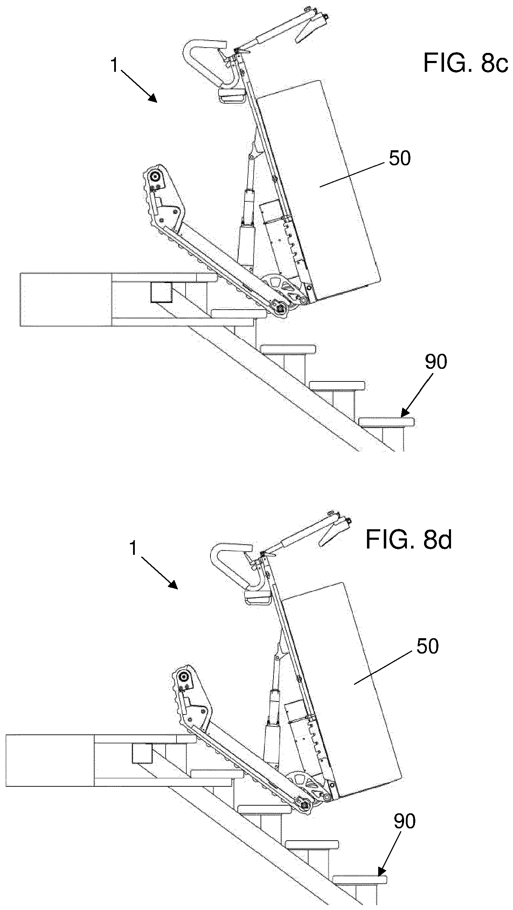

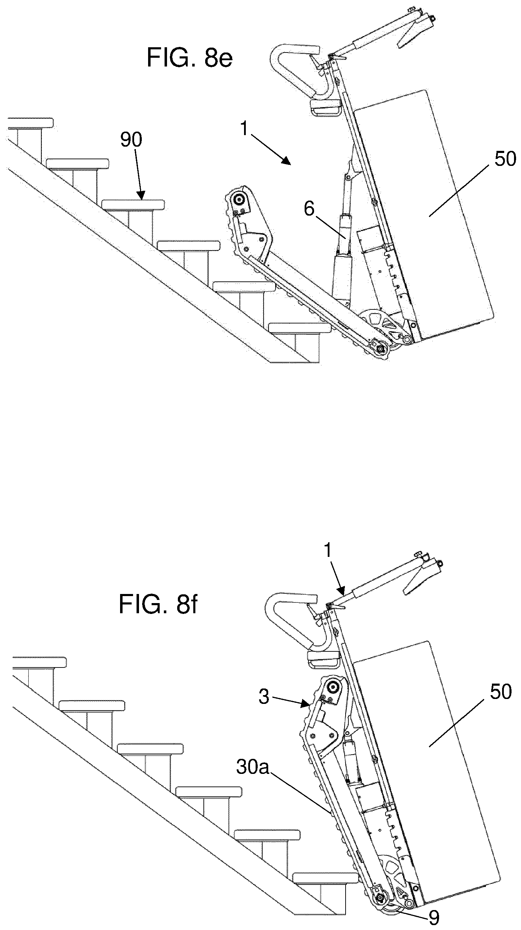

Conveniently, the vertical operating condition of the trolley 1 can also define the starting condition / for the ascent of a stair 90. In particular, starting from this condition (see fig. 8f), in which the trolley 1 rests on the ground only on the wheels 9 and not on the tracks 3, the activation of the inclination means 6 causes the backward inclination of the load-bearing frame 2 and of the tracks 3 until the latter come into contact with the first steps to be climbed (see 8e), thus making it possible to speed up the start of the climb.

Conveniently, the vertical operating condition of the trolley 1 can also define the final / arrival condition at the end of the descent of a stair 90. In particular, during the descent of a stair, the trolley 1 is in the condition in which the loading structure 5 it is inclined with respect to the supporting frame 2 and in which the tracks 3, resting on the steps, cause the trolley 1 to advance downwards. Therefore, while the landing / ground floor foreseen at the end of the staircase 90 is being reached (see fig. 8e), in particular when the height of the last steps is high, the operator can activate the tilting means 6 so as to bring the tracks 3 and the load-bearing frame 2 to detach from the last steps, to thus approach the load structure 5, while the wheels 9 of the latter rest on the landing / ground floor. In doing so, therefore, the carriage 1 reaches the substantially vertical condition (see Fig. 8f).

Conveniently, as shown in Figures 9a - 9g, the trolley 1 according to the present invention also allows traditional handling, both upwards of a stair 90 and downwards, in which the tracks 3 - and in particular the main portion 30a - reach the landing / ground floor keeping the load structure 5 inclined with respect to the supporting frame 2 and to the tracks 3.

Advantageously, as shown in fig. 2 and 3, the trolley 1 can also assume a horizontal condition, which is particularly stable, in which it is in contact with the support surface with only the tracks 3 (see fig. 3) and in which the load structure 5 is close to the tracks 3 and to the supporting frame 2.

Advantageously, therefore, the trolley 1 according to the invention allows a further and additional use to the traditional ones to face the initial section of an uphill flight of stairs or the final section of a downward flight of stairs, and this is particularly useful for transporting particularly high loads (substantially over 2 meters).

Furthermore, the trolley 1 allows to adjust - thanks to the means 6 - the inclination of the load structure 5, and therefore of the load, according to the height of the steps of the stair (and therefore to its slope), while maintaining a high agility in the movements of the trolley thanks to the presence of the wheels 9 mounted on the loading structure 5 and of the tracks 3.

From what has been said it is clear that the trolley according to the present invention is particularly advantageous in that it is simple to make, has a small footprint, and allows at the same time to safely and nimbly transport a load downhill from or uphill on a stair of any size or shape, both helical and straight.

Unlike CN103129591 and FR3053302, in the trolley according to the invention, the supporting and sliding or rolling means, and in particular the wheels 9, are mounted on the load structure 5, and not on the supporting frame 2 on which they are rotatably mounted. the tracks 3. Furthermore, the present solution differs from CN103129591, FR3053302, CN106080724 and CN105691431 since the motor or drive means of the tracks are, at the same time, two and independent for each of said two tracks 3, they are positioned internally between said two tracks 3 in correspondence with said secondary portion 30b of the tracks 3 which is inclined with respect to said main portion 30a and are aligned with each other along an axis / direction 82 which corresponds or is in any case parallel to the direction of mutual spacing (ie the direction transversal with respect to the longitudinal development) of the two tracks 3. The combination of all these characteristics that differentiate the present solution compared to the state of the art, it is particularly advantageous in that it allows to reduce and optimize the overall dimensions of the trolley itself, without thereby affecting the performance and versatility of use of the trolley according to the invention which can also be positioned in a substantially vertical condition in which the tracks are spaced from the supporting surface.

The trolley described above is susceptible of numerous modifications and variations within the scope of protection defined by the content of the claims. The present invention has been illustrated and described in some of its preferred embodiments, but it is understood that executive variations may apply thereto in practice, without however departing from the scope of protection of the appended claims.

## Claims

1. Trolley (1) for the transport of a load (50), in particular on stairs, preferably of the self-propelled stairlift type, said trolley comprising:
- a load-bearing frame (2) on which at least two tracks (3) are rotatably mounted so as to protrude from the lower part of said load-bearing frame (2), thus defining a lower sliding plane (4) for the trolley (1), each of said tracks (3) comprising a main portion (30a) and a secondary portion (30b) which is inclined / tiltable with respect to said main portion (30a), said secondary portion (30b) being positioned at the front (F) or rear (R) of said trolley (1), said two tracks (3) being spaced apart and each of said tracks (3) being positioned at one side of said load-bearing frame (2),
- motor or drive means of said two tracks (3),
- a load structure (5) which is configured to support the load to be transported, said load structure (5) is articulated to said load-bearing frame (2) in correspondence with an area (F, R) which is opposite to that (R, F) in which said secondary portion (30b) is provided,
- means (6) for varying the inclination between said load structure (5) and the load-bearing frame (2),
- supporting and sliding or rolling means which are mounted on said load structure (5),
and being configured so as to assume:
- a first condition in which said trolley (1) is in contact with an underlying support surface with said support and sliding or rolling means while said tracks (3) are spaced apart from said underlying support surface, and
- a second condition in which said trolley (1) is in contact with an underlying support surface with said tracks (3), while said support and sliding or rolling means are spaced apart from said underlying supporting surface and **characterized in that** said motor or drive means:
- are independent for each of said two tracks (3),
- are positioned internally between said two tracks (3) in correspondence with said secondary portion (30b) of the tracks (3) which is inclined with respect to said main portion (30a),
- they are aligned with each other along a direction (82) corresponding, or parallel, to the direction of mutual spacing of the two tracks (3).

2. Trolley according to claim 1, **characterized in that** it comprises a transversal casing (8) for containing and / or covering the respective motor or drive means driving the tracks (3), said transversal casing (8) developing between the internal sides of the two tracks (3) and being mounted on the load-bearing frame (2).

3. Trolley according to one or more of the preceding claims, **characterized in that** it is configured in such a way that said means (6) for varying the inclination between said load structure (5) and the load-bearing frame (2) also cause the passage between said first condition and said second condition.

4. Trolley according to one or more of the preceding claims, **characterized in that** it is configured so that:
- when in said first condition, the load structure (5) is close to the load-bearing frame (2) and to the tracks (3), and said tracks (3) are arranged / oriented substantially vertically, in particular by about 0- 25 ° from the vertical,
- when it is in said second condition, the load structure (5) is spaced from the load-bearing frame (2) and they define an angle between them greater than about 15 °, preferably greater than about 25 °.

5. Trolley according to one or more of the preceding claims, **characterized in that** said supporting and sliding or rolling means comprise at least one wheel (9), preferably two identical and coaxial wheels (9).

6. Trolley according to claim 5, **characterized in that** it is configured in such a way that, when in said first condition, the trolley (1) rests on the underlying supporting surface with said at least one wheel (9) and with a part of the load structure (5)

7. Trolley according to one or more of the preceding claims **characterized in that** it comprises a power supply unit and / or a control and command unit which are mounted on said load structure (5).

8. Trolley according to one or more of the claims 5 - 7, **characterized in that** the axis (91) of rotation of said at least one wheel (9) is parallel to the direction of mutual alignment (82) of the motor or drive means of said two tracks (3).

9. Trolley according to one or more of the preceding claims 5 - 8, **characterized in that** it comprises at least one articulation arm (7) which is pivoted at one end to said load-bearing frame (2) and at the other end to said load structure (5) and by the fact that the axis of articulation of said at least one articulation arm (7) to the load structure (5) is distinct and parallel with respect to the axis (91) of rotation of said at least one wheel (9).

10. Trolley according to one or more of the preceding claims 5 - 9, **characterized in that** the axis of rotation (91) of said at least one wheel (9), which is mounted on the load structure (5), and the axis of rotation (33) of rotating elements (31') provided at the ends of the main portion (30a) of said tracks (3) are substantially always parallel to each other, but never coaxial.

11. Trolley according to one or more of the preceding claims **characterized in that** it comprises handle / grip means (23) mounted in correspondence with the upper end part (12) of the load structure (5) which is opposite to the lower one (11) which is articulated to the load-bearing frame (2).

12. Trolley according to one or more of the preceding claims **characterized in that** said supporting and sliding or rolling means are positioned internally between said two tracks (3).

13. Trolley according to one or more of the preceding claims **characterized in that** said load structure (5) comprises two load bases (51, 52), which are angled to each other, preferably arranged so as to define an angle of about 90° , and in which said first load base (51) of said load structure (5) is configured to act as a lateral support for the load to be transported (50) while said second load base (52) of said load structure ( 5) acts as a lower support for the load to be transported (50).

14. Trolley according to one or more of the preceding claims 5-13, **characterized in that** it is configured in such a way that, when it is in said first condition, the trolley (1) rests on the underlying supporting surface with said at least one wheel (9) and with the lower end of the load base (51) of said load structure (5) to which the means (6) are articulated for varying the inclination between said load structure (5) and the load-bearing frame (2).

15. Trolley according to one or more of the preceding claims **characterized in that** the width of the load structure (5) is substantially equal to or less than the lateral distance (81) between the two tracks (3).

## Patentansprüche

1. Wagen (1) zum Transport einer Ladung (50), insbesondere auf Treppen, vorzugsweise vom Typ selbstfahrender Treppenlift, wobei der Wagen umfasst:
- einem Ladungsaufnahmerahmen (2), an dem mindestens zwei Raupen (3) drehbar gelagert sind, so dass sie aus dem unteren Teil des Ladungsaufnahmerahmens (2) herausragen und so eine untere Gleitebene (4) für den Wagen (1) definieren, wobei jede der Raupen (3) einen Hauptabschnitt (30a) und einen Nebenabschnitt (30b) umfasst, der in Bezug auf den Hauptabschnitt (30a) geneigt/kippbar ist, wobei der Nebenabschnitt (30b) ist an der Vorderseite (F) oder Rückseite (R) des Wagens (1) positioniert, wobei die beiden Raupen (3) voneinander beabstandet sind und jede der Raupen (3) an einer Seite des Ladungsaufnahmerahmens (2) positioniert ist,
- Motor- oder Antriebsmittel dieser beiden Raupen (3),
- eine Ladungsstruktur (5), die dazu konfiguriert ist, um die zu transportierende Ladung zu tragen, wobei die Ladungsstruktur (5) entsprechend einem Abschnitt (F, R), die dem Abschnitt (R, F) gegenüberliegt, in dem dieser Nebenabscnjtt (30b) vorgesehen ist, auf dem Ladungsaufnahmerahmen (2) angelenkt ist,
- Mittel (6) zum Verändern der Neigung zwischen der Ladungsstruktur (5) und dem Ladungsaufnahmerahmen (2), - Stütz- und Gleit- oder Rollmittel, die an der Ladungsstruktur (5) montiert sind und so konfiguriert sind, dass sie Folgendes übernehmen:
- einen ersten Zustand, in dem der Wagen (1) mit den Stütz- und Gleit- oder Rollmitteln in Kontakt mit einer darunter liegenden Stützfläche steht, während die Raupen (3) von der darunter liegenden Stützfläche beabstandet sind und
- einen zweiten Zustand, in dem der Wagen (1) in Kontakt mit einer darunter liegenden Stützfläche mit den Raupen (3) steht, während die Stütz- und Gleit- oder Rollmittel von dieser darunterliegenden Stützfläche beabstabdet sind, und **dadurch gekennzeichnet, dass** der Motor oder die Antriebsmittel:
- für jede der beiden Raupen (3) unabhängig sind,
- im Inneren zwischen den beiden Raupen (3) in Übereinstimmung mit dem Nebenabschnitt (30b) der Raupen (3) positioniert sind, der in Bezug auf den Hauptabschnitt (30a) geneigt ist,
- sie sind entlang einer Richtung (82) zueinander ausgerichtet, die der Richtung des gegenseitigen Abstands der beiden Raupen (3) entspricht oder parallel ist.

2. Wagen nach Anspruch 1, **dadurch gekennzeichnet, dass** er ein Quergehäuse (8) zur Aufnahme und/oder Abdeckung der jeweiligen Motormittel oder zum Antrieb der Raupen (3) umfasst, wobei das Quergehäuse (8) zwischen den Innenseiten der beiden Raupen (3) verläuft und am Ladungsaufnahmerahmen (2) montiert ist.

3. Wagen nach einem oder mehreren der vorhergehenden Ansprüche, **dadurch gekennzeichnet, dass** er so ausgestaltet ist, dass die Mittel (6) zur Veränderung der Neigung zwischen der Ladungsstruktur (5) und dem Ladungsaufnahmerahmen (2) auch die Durchfahrt zwischen dem ersten Zustand und dem zweiten Zustand bewirken.

4. Wagen nach einem oder mehreren der vorhergehenden Ansprüche, **dadurch gekennzeichnet, dass** er so konfiguriert ist, dass:
- im ersten Zustand befindet sich die Ladungsstruktur (5) nahe am Ladungsaufnahmerahmen (2) und an den Raupen (3) und sind die Raupen (3) im Wesentlichen vertikal, insbesondere etwa vertikal, insbesondere 0-25° von der Vertikalen, angeordnet/ausgerichtet,
- wenn sie sich im zweiten Zustand befindet, ist die Ladungsstruktur (5) vom Ladungsaufnahmerahmen (2) beabstandet und sie zwischen sich einen Winkel von mehr als etwa 15°, vorzugsweise mehr als etwa 25°, definieren.

5. Wagen nach einem oder mehreren der vorhergehenden Ansprüche, **dadurch gekennzeichnet, dass** die Stütz- und Gleit- oder Rollmittel mindestens ein Rad (9), vorzugsweise identische und koaxiale Räder (9) umfassen.

6. Wagen nach Anspruch 5, **dadurch gekennzeichnet, dass** er so konfiguriert ist, dass der Wagen (1) im ersten Zustand mit dem mindestens einen Rad (9) mit einem Teil der Ladungsstruktur (5) auf der darunter liegenden Auflagefläche ruht.

7. Wagen nach einem oder mehreren der vorhergehenden Ansprüche, **dadurch gekennzeichnet, dass** er eine Stromversorgungseinheit und/oder die Steuer- und Kontrolleinheit umfasst, die an der Ladungsstruktur (5) montiert sind.

8. Wagen nach einem oder mehreren der vorhergehenden Ansprüche 5 - 7, **dadurch gekennzeichnet, dass** die Drehachse (91) des mindestens einen Rades (9) parallel zur Richtung der gegenseitigen Ausrichtung (82) des Motors oder der Antriebsmittel der beiden Raupen (3) ist.

9. Wagen nach einem oder mehreren der vorhergehenden Ansprüche 5 - 8, **dadurch gekennzeichnet, dass** er mindestens einen Gelenkarm (7) aufweist, der an einem Ende am Ladungsaufnahmerahmen (2) und am anderen Ende an der Ladungsstruktur (5) gedreht wird und dadurch dass die Gelenkachse des mindestens einen Gelenkarms (7) an der Ladungsstruktur (5) eindeutig und parallel zur Drehachse (91) des mindestens einen Rades (9) ist.

10. Wagen nach einem oder mehreren der vorhergehenden Ansprüche 5 - 9, **dadurch gekennzeichnet, dass** die Drehachse (91) des mindestens einen Rades (9), das an der Ladungsstruktur (5) montiert ist, und die Drehachse (33) der rotierenden Elemente (31'), die an den Enden des Hauptabschnitts (30a) der Raupen (3) vorgesehen sind, im Wesentlichen immer parallel zueinander, jedoch niemals koaxial, sind.

11. Wagen nach einem oder mehreren der vorhergehenden Ansprüche, **dadurch gekennzeichnet, dass** er Greif- /Aufnahmemittel (23) aufweist, die entsprechend dem oberen Endteil (12) der Ladungsstruktur (5) montiert sind, der dem unteren Endteil (11) gegenüberliegt und gelenkig mit dem Ladungsaufnahmerahmen (2) verbunden ist.

12. Wagen nach einem oder mehreren der vorhergehenden Ansprüche, **dadurch gekennzeichnet, dass** die Stütz- und Gleit- oder Rollmittel im Inneren zwischen den beiden Raupen (3) positioniert sind.

13. Wagen nach einem oder mehreren der vorhergehenden Ansprüche, **dadurch gekennzeichnet, dass** die Ladungsstruktur (5) zwei Ladungsbasen (51, 52) umfasst, die zueinander abgewinkelt sind, vorzugsweise so angeordnet sind, dass sie einen Winkel von etwa 90° definieren, und wobei die erste Ladungsbasis (51) der Ladungsstruktur (5) so konfiguriert ist, dass sie als seitliche Stütze für die zu transportierende Ladung (50) wirkt, während die zweite Ladungsbasis (52) der Ladungsstruktur (5) als eine untere Stütze für die zu transportierende Ladung (50) wirkt.

14. Wagen nach einem oder mehreren der vorhergehenden Ansprüche 5 - 13, **dadurch gekennzeichnet, dass** er so konfiguriert ist, dass der Wagen (1) im ersten Zustand mit dem mindestens einen Rad (9) auf der darunter liegenden Auflagefläche aufliegt und mit dem unteren Ende der Ladungsbasis (51) der Ladungsstruktur (5) an der darunter liegenden Stützfläche mit dem unteren Ende der Ladungsbasis (51) der Ladungsstruktur (5) aufliegt, mit der die Mittel (6) angelenkt sind, um die Neigung zwischen der Ladungsstruktur (5) und dem Ladungsaufnahmerahmen (2) zu verändern.

15. Wagen nach einem oder mehreren der vorhergehenden Ansprüche, **dadurch gekennzeichnet, dass** die Breite der Ladungsstruktur (5) im Wesentlichen gleich oder kleiner als der seitliche Abstand (81) zwischen den beiden Raupen (3) ist.

## Revendications

1. Chariot (1) pour le transport d'une charge (50), notamment dans des escaliers, de préférence du type monte-escalier automoteur, **caractérisé en ce que** le chariot comprend :
- un châssis porteur de charge (2) sur lequel au moins deux chenilles (3) sont montées rotatives de manière à faire saillie de la partie inférieure dudit châssis porteur de charge (2), définissant ainsi un plan de coulissement inférieur (4) pour le chariot (1), chacune desdites chenilles (3) comprenant une partie principale (30a) et une partie secondaire (30b) qui est inclinée/inclinable par rapport à ladite partie principale (30a), ladite partie secondaire (30b) étant positionnée à l'avant (F) ou à l'arrière (R) dudit chariot (1), lesdites deux chenilles (3) étant espacées et chacune desdites chenilles (3) étant positionnée d'un côté dudit châssis porteur de charge (2),
- des moyens moteurs ou de guide desdites deux chenilles (3),
- une structure de charge (5) qui est configurée pour supporter la charge à transporter, ladite structure de charge (5) étant articulée audit châssis porteur de charge (2) en correspondance avec une zone (F, R) qui est opposée à celle (R, F) dans laquelle est prévue ladite partie secondaire (30b),
- des moyens (6) pour faire varier l'inclinaison entre ladite structure de charge (5) et le châssis porteur de charge (2),
- des moyens de support et de coulissement ou de roulement, qui sont montés sur ladite structure de charge (5), et étant configurés de manière à assumer :
- une première condition dans laquelle ledit chariot (1) est en contact avec une surface d'appui sous-jacente auxdits moyens de support et de coulissement ou de roulement, tandis que lesdites chenilles (3) sont espacées desdites surface de support sous-jacente, et
- une deuxième condition dans laquelle ledit chariot (1) est en contact avec une surface d'appui sous-jacente auxdites chenilles (3), tandis que lesdits moyens de support et de coulissement ou de roulement sont espacés de la dite surface de support sous-jacente et **caractérisé en ce que** ledit moteur ou moyen d'entraînement:
- sont indépendants pour chacune desdites deux chenilles (3),
- sont positionnés intérieurement entre lesdites deux chenilles (3) en correspondance avec ladite partie secondaire (30b) des chenilles (3) qui est inclinée par rapport à ladite partie principale (30a),
- et sont alignées l'une avec l'autre selon une direction (82) correspondant, ou parallèle, à la direction d'écartement mutuel des deux chenilles (3).

2. Chariot selon la revendication 1, **caractérisé en ce qu'**il comprend un carter transversal (8) pour contenir et/ou recouvrir les moyens moteurs respectifs ou pour entraîner les chenilles (3), ledit carter transversal (8) se développant entre les côtés internes des deux chenilles (3) et étant monté sur le châssis porteur de charge (2).

3. Chariot selon une ou plusieurs des revendications précédentes, **caractérisé en ce qu'**il est configuré de telle manière que lesdits moyens (6) pour faire varier l'inclinaison entre ladite structure de charge (5) et le châssis porteur de charge (2) provoquent également le passage entre ladite première condition et ladite deuxième condition.

4. Chariot selon une ou plusieurs des revendications précédentes, **caractérisé en ce qu'**il est configuré de telle sorte que:
- dans ladite première condition, la structure de charge (5) est proche du châssis porteur de charge (2) et des chenilles (3), et lesdites chenilles (3) sont disposées/orientées sensiblement verticalement, notamment d'environ 0-25° par rapport à la verticale,
- dans ladite deuxième condition, la structure de charge (5) est espacée du châssis porteur de charge (2) et il définissent entre eux un angle supérieur à environ 15°, de préférence supérieur à environ 25°.

5. Chariot selon une ou plusieurs des revendications précédentes, **caractérisé en ce que** lesdits moyens de support et de coulissement ou roulement comprennent au moins une roue (9), de préférence deux roues (9) identiques et coaxiales.

6. Chariot selon la revendication 5, **caractérisé en ce qu'**il est configuré de telle manière que, dans ladite première condition, le chariot (1) repose sur la surface d'appui sous-jacente avec ladite au moins une roue (9) et avec une partie de la structure de charge (5).

7. Chariot selon une ou plusieurs des revendications précédentes, **caractérisé en ce qu'**il comprend une unité d'alimentation d'énergie et/ou l'unité de contrôle et de commande qui sont montées sur ladite structure de charge (5).

8. Chariot selon une ou plusieurs des revendications 5 - 7, **caractérisé en ce que** l'axe de rotation (91) de ladite au moins une roue (9) est parallèle à la direction d'alignement mutuel (82) du moteur ou des moyens d'entraînement, desdites deux chenilles (3).

9. Chariot selon une ou plusieurs des revendications précédentes 5 - 8, **caractérisé en ce qu'**il comprend au moins un bras d'articulation (7) qui pivote à une extrémité vers ledit châssis porteur de charge (2) et à l'autre extrémité vers ladite structure de charge (5) et **en ce que** l'axe d'articulation dudit au moins un bras d'articulation (7) sur la structure de charge (5) est distinct et parallèle par rapport à l'axe de rotation (91) de ladite au moins une roue (9).

10. Chariot selon une ou plusieurs des revendications précédentes 5 - 9, **caractérisé en ce que** l'axe de rotation (91) de ladite au moins une roue (9), qui est montée sur la structure de charge (5), et l'axe de rotation (33) des éléments rotatifs (31') prévus aux extrémités de la partie principale (30a) desdites chenilles (3) sont sensiblement toujours parallèles les uns aux autres, mais jamais coaxiaux.

11. Chariot selon une ou plusieurs des revendications précédentes, **caractérisé en ce qu'**il comprend des moyens de poignée et de préhension (23) montés en correspondance avec la partie d'extrémité supérieure (12) de la structure de charge (5) qui est opposée à la partie inférieure (11) articulée au châssis porteur de charge (2).

12. Chariot selon une ou plusieurs des revendications précédentes, **caractérisé en ce que** lesdits moyens de support et de coulissement ou de roulement sont entre lesdites deux chenilles (3).

13. Chariot selon une ou plusieurs des revendications précédentes, **caractérisé en ce que** ladite structure de charge (5) comprend deux bases de charge (51, 52) qui sont inclinées l'une par rapport à l'autre, de préférence disposées de manière à définir un angle d'environ 90°, et dans lequel ladite première base de charge (51) de ladite structure de charge (5) est configurée pour agir comme un support latéral pour la charge (50) à transporter, tandis que ladite deuxième base de charge (52) de ladite structure de charge (5) agit comme un support inférieur pour la charge (50) à transporter.

14. Chariot selon une ou plusieurs des revendications précédentes 5 - 13, **caractérisé en ce qu'**il est configuré de telle manière que, lorsqu'il se trouve dans ladite première condition, le chariot (1) repose sur la surface d'appui sous-jacente avec ladite au moins une roue (9) et avec l'extrémité inférieure de la base de charge (51) de ladite structure de charge (5) sur laquelle sont articulés les moyens (6) pour faire varier l'inclinaison entre ladite structure de charge (5) et le châssis porteur de charge (2).

15. Chariot selon une ou plusieurs des revendications précédentes, **caractérisé en ce que** la largeur de la structure de charge (5) est sensiblement égale ou inférieure à la distance latérale (81) entre les deux chenilles (3).
